# EUROPEAN PATENT SPECIFICATION

(11) **EP 3 397 558 B1**
(45) Date of publication and mention of the grant of the patent: **11.09.2019**
(21) Application number: 16826008.1
(22) Date of filing: 23.12.2016
(51) Int. Cl.: B65B 25/00, B65B 31/02, B65B 55/22, B65B 59/00, B65B 3/00, B65B 3/28, B65B 7/28

(54) **AUTOMATIC MACHINE FOR THE PACKAGING, PRESERVATION AND TRANSPORT OF SURGICAL, HISTOLOGICAL, AUTOPSY AND CYTOLOGICAL SPECIMENS BY HEALTHCARE WORKERS IN SAFETY**
AUTOMATISCHE MASCHINE ZUM VERPACKEN, KONSERVIEREN UND TRANSPORTIEREN VON CHIRURGISCHEN, HISTOLOGISCHEN, AUTOPSIE- UND ZYTOLOGISCHEN PROBEN DURCH MEDIZINISCHES PERSONAL IN DER SICHERHEIT
MACHINE AUTOMATIQUE POUR L'EMBALLAGE, LA CONSERVATION ET LE TRANSPORT DE SPÉCIMENS CHIRURGICAUX, HISTOLOGIQUES, D'AUTOPSIE ET CYTOLOGIQUES PAR LE PERSONNEL DE SANTÉ DANS LA SÉCURITÉ

(30) Priority: 28.12.2015 IT UB20159508
(43) Date of publication of application: 07.11.2018
(73) Proprietor: Mecatron Automazione S.r.l., 64010 Colonnella (TE) (IT); Patholab S.r.l., 09047 Selargius (CA) (IT)
(72) Inventor: CINTI, Mario, 63100 Ascoli Piceno (IT); MADAU, Giacomo, 09123 Cagliari (IT); BICOCCHI, Enrico, 57128 Livorno (IT)
(74) Representative: Primiceri, Maria Vittoria
(86) International application number: PCT/EP2016/025191
(87) International publication number: WO 2017/114598

(56) References cited:
- EP-A1- 2 524 595
- WO-A1-2013/192606
- WO-A1-2015/092772
- US-A1- 2009 191 533
- US-B1- 7 156 814
- GIANNI BUSSOLATI ET AL: "Tissue transfer to pathology labs: under vacuum is the safe alternative to formalin", VIRCHOWS ARCHIV, SPRINGER, BERLIN, DE, vol. 452, no. 2, 21 December 2007 (2007-12-21), pages 229-231, XP019590257, ISSN: 1432-2307

## Description

### Field of the invention

This invention relates to the field of pathological anatomy, in particular to the sector related to the packaging and handling of histological samples and, more specifically, to a completely automatic machine for the packaging, preservation and transport of surgical, histological, cytological and autopsy specimens by healthcare workers in safety.

### Background of the invention

Currently, in the sector related to the packaging and handling of histological samples, healthcare workers in the operating theatre take biological specimens and place them directly in the specimen container, which is then filled with formalin used as a fixative, and close it with its lid; or they insert it in containers pre-filled with formalin fixative liquid.

The specimen container is transferred from the operating block to the pathology laboratory. In the case of use of specimen containers filled with formalin fixative liquid, it may happen that, during transport, the cover of the container accidentally opens, because it is not sealed, with consequent spillage of the formalin liquid and/or biological material in the container in the surrounding environment. When the container is opened in the laboratory, if there are accidental spills, the healthcare worker is enveloped in the fumes produced by the liquid formalin, since this procedure is not carried out in safety.

The pathology laboratory receives the specimen container from the operating block and proceeds to sampling the tissue to be examined.

During processing in the laboratory, the operator can see that the volume of the container and/or the quantity of fixative used are not always appropriate to the volume of the mass of the histological specimen to be treated; so it is sometimes necessary to replace the container or add to and/or completely replace the fixative in it.

After fixing the biological specimen, the laboratory technician samples the tissue to be examined inside the hood. After sampling, the biological specimen is put back in the specimen container sample holder and archived, as required by current law.

The following documents are known in the state of the art of the sector linked to the packaging and handling of histological samples:
- WO 2015/092772 claiming priority of Italian application no. VA2013A000067, which discloses a semi-automatic anti-contamination and safety system for the operator applied to thermo-sealing machines for filling and sealing containers with liquids.
- EP2524595A1 discloses a method for automatically dosing a fixative solution in a flexible bag containing at least one organic biological specimen.
- US2009191533 discloses a semi-automatic system that avoids the use of formalin and that is based on the use of envelopes in which is placed the tissue or organ is placed and which are then evacuated.
- PD2012A000345 discloses a semi-automatic machine that allows the preservation of organs or, in general, anatomical parts extracted during surgery, in preservatives such as formalin without any of the persons present in the operating theatre coming in contact with them. Said machine uses a sealed container for transporting organs or anatomical parts immersed in formalin in a quantity appropriate to their shape and size.

In the systems disclosed above, the operations are carried out semiautomatically in that, after setting the program, the healthcare worker, in the case of bags, must insert the formalin dispensing nozzle inside them while, in the case of the containers, weighing and insertion in the sealing and vacuum bell occurs by manually pushing a trolley towards said bell and then giving the command to start the program.

These semi-automatic methods, despite having improved aspects compared to the completely manual method, have drawbacks, such as:
- lack of an aspirated safety compartment in the event of the spillage of formalin or biological material;
- non-automatic system with a series of steps that must be performed manually by the operator.

At the state of the art, it is known that the preparation technique used for filling histological specimen bags or containers is that of automatically filling the containers themselves with formalin or cool packaging in a vacuum/vacuum-packing and/or in a protective atmosphere with inert gas depending on the needs of the pathology laboratory based on the diagnostic needs of the biological specimen.

Following the first step, the healthcare worker puts the lid on the container.

The transport of the specimen container from the operating block to the pathology laboratory is performed in greater safely than the totally manual method because the sealing of the container prevents any spillage of the liquid and/or biological material.

In the case of bags, the specimen container is opened by cutting the edge with scissors while, in the case of containers by cutting the welded film with a scalpel.

Another known method consists in packaging histological specimen bags and containers using the cool technique in a vacuum/vacuum-packing or in protective atmosphere with inert gas. With this packaging technology, the biological specimen taken in the operating theatre is inserted directly into the specimen bag or container.

Then, the healthcare worker inserts the histological specimen bag or container in the machine for the preservation of the histological specimen preservation machine and sets the specific program using its electronic control panel. The bag or container with the biological specimen inside is brought under vacuum/vacuum-packing, eliminating about 80% of the oxygen; in the case of using specimen containers, just vacuum-packing alone eliminates about 99.99% of the oxygen and gaseous nitrogen is inserted to compensate for the variation of the depression between the inside and the outside of the container to prevent crushing of the biological specimen, and the opening is heat sealed with a transparent thermo-sealing film

The system of packaging in bags has the following drawbacks:
- manual insertion and stretching of the bag inside the bell, making sure that the edge is straight on the sealing bar;
- manual insertion of the formalin loading nozzle inside the bag;
- closing the bell to start the process;
- reopening the bell to remove the specimen bag;
- any spillage of formalin inside the bell can escape into the environment.

The system of packaging in containers has the following drawbacks:
- the container with the specimen is manually placed on the scale integrated into the instrument;
- manually moving the container from the scale to container trolley;
- manual change of the shape of the container carrier, when switching from small-diameter containers to those with larger diameter, the reducer is moved manually;
- setting the program and manually pushing the container trolley to the bell for creating the vacuum/filling with formalin;
- starting the program after inserting the trolley;
- manual removal of the trolley from the bell;
- any accidental spillage of formalin inside the bell or in the container trolley can escape into the environment;
- once sealed with the film, the specimen container cannot be sealed a second time and must be replaced with a new one;
- all the manual steps endanger the healthcare worker through exposure to formalin, which is classified as a carcinogen; in addition, there can be more procedural errors.

### Disclosure of the invention

The purpose of this invention is to provide a completely automatic machine that allows healthcare workers to package, preserve and transport surgical specimens in safety.

Another purpose of this invention is to optimise both the preservation of biological specimens and the safety of healthcare workers.

Another purpose of this invention is the use of the same container for all steps of the process, from the operating block to archiving.

Last but not least, the purpose of this invention is the sealing of the containers with a pre-treated aluminium disc that prevents any spillage of liquid and/or biological material and generation of waste.

These and other purposes are achieved with this invention, which relates to a completely automatic machine for the packaging, preservation and transport of surgical, histological, autopsy and cytological specimens by healthcare workers in safety.

Further characteristics and advantages of the invention will become apparent from the description of a preferred, but not exclusive, embodiment of the machine covered by this patent application, illustrated by way of non-limiting indication in the accompanying drawings in which:

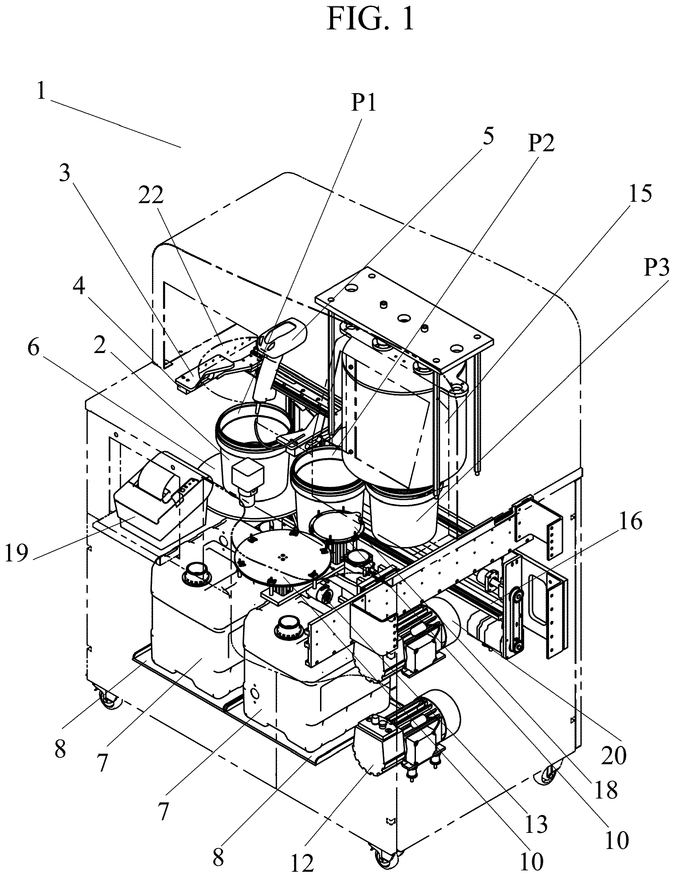

- Fig. 1 is a three-dimensional view of a machine (1) in which are visible:
   - a histological container (2);
   - a centring device (22) of the container (2) during loading;
   - a gripper (3);
   - two load cells (4) of the gripper (3);
   - a gun barcode reader (5);
   - a lifting plate (6);
   - two tanks of formalin (7);
   - two load cells of the formalin (8);
   - a plate (10) on which is supported a pre-treated aluminium disc (18);
   - a vacuum pump (12);
   - a micro-pump (13);
   - a vacuum chamber (15);
   - a movement group (16) for the horizontal displacement of the container (2) from position 1 (P1) to position 2 (P2) and to position 3 (P3);
   - a printer (19);
   - a suction pump (20) of the aluminium disc (18);

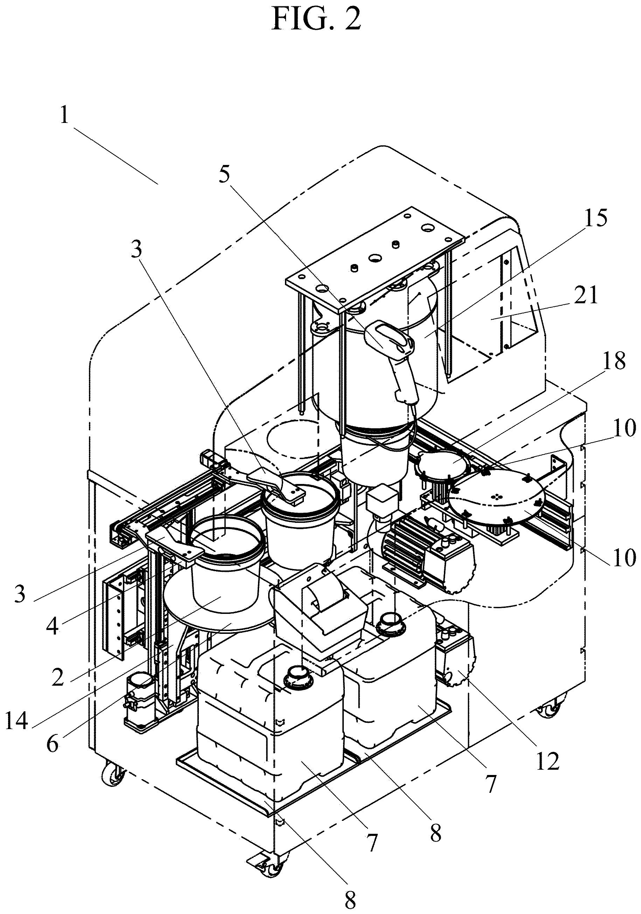

- Fig. 2 is a further three-dimensional view of the machine (1) in which are visible:
   - a support (14) of the lifting plate (6);
   - a movement group (17) for the vertical displacement of the container (2);
   - an electronic control panel (21);

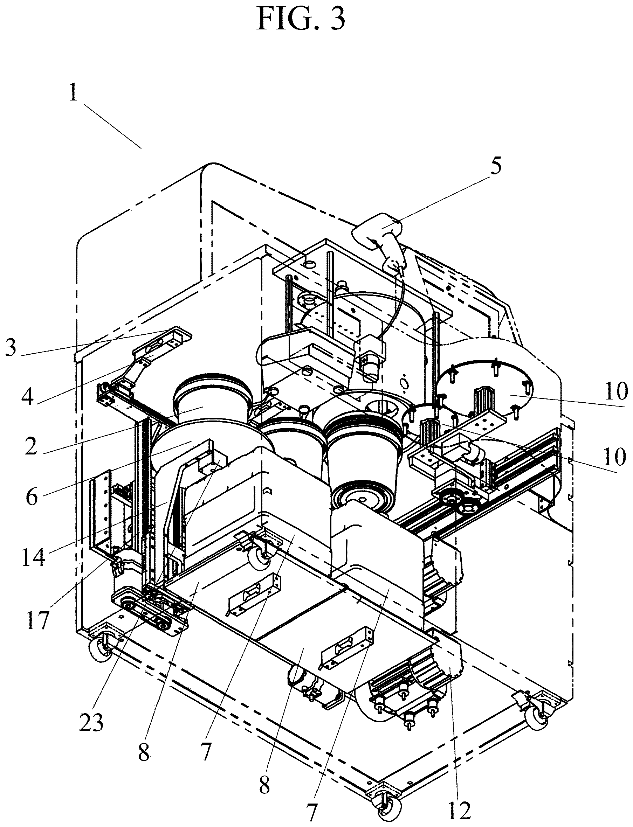

- Fig. 3 is a three-dimensional view from below upwards of the machine (1) in which is visible:
   - a suction cup (23) for holding the container (2);

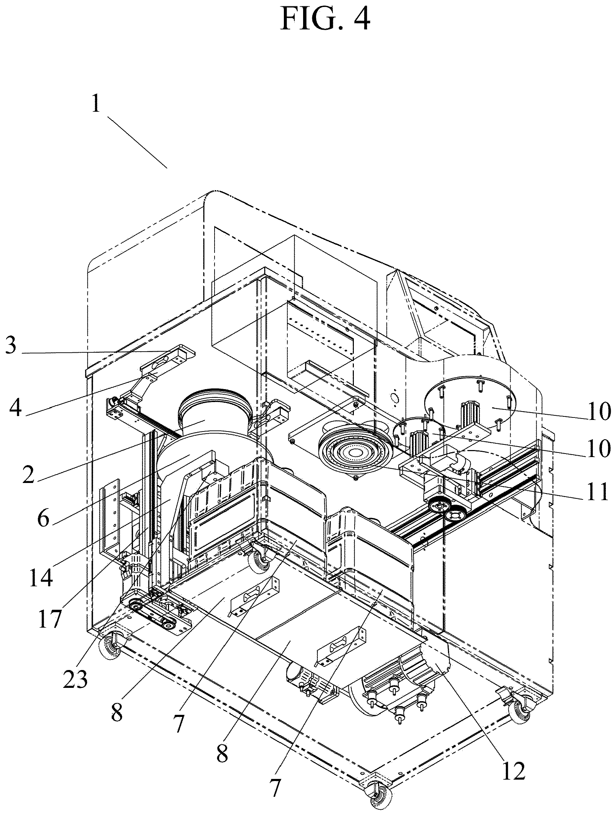

- Fig. 4 is a further three-dimensional view from below upwards of the machine (1) in which is visible a welding plate (11);

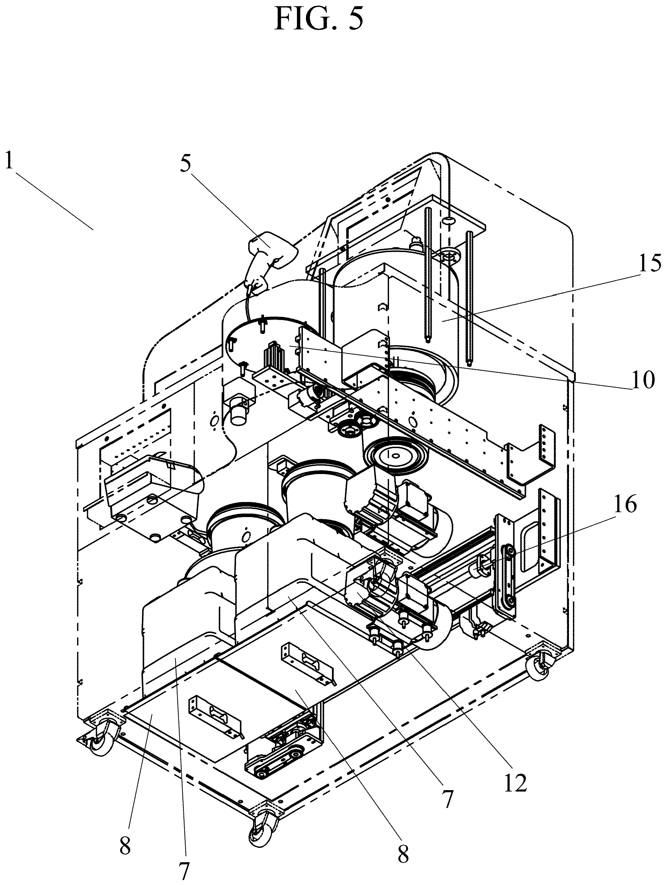

- Fig. 5 is a three-dimensional view of the machine (1) from the bottom upwards different from Figs. 3 and 4;

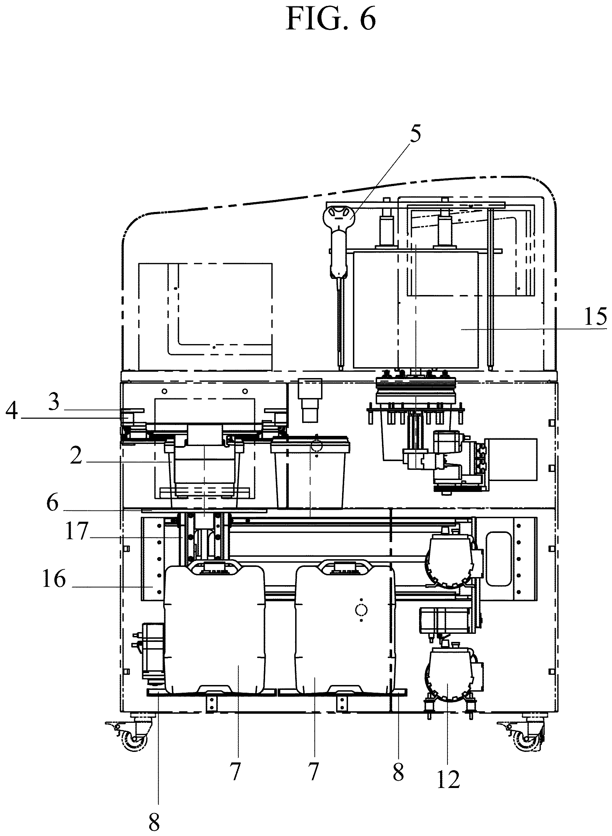

- Fig. 6 is a front view of the machine (1);

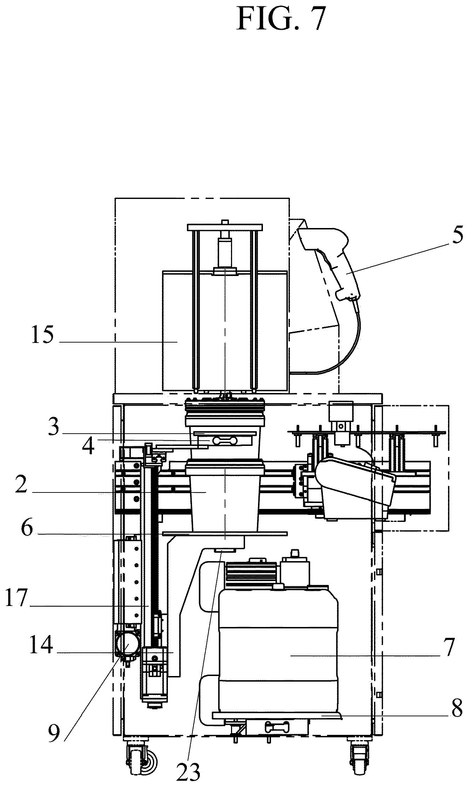

- Fig. 7 is a side view of the machine (1) in which is visible a pump for the formalin (9);

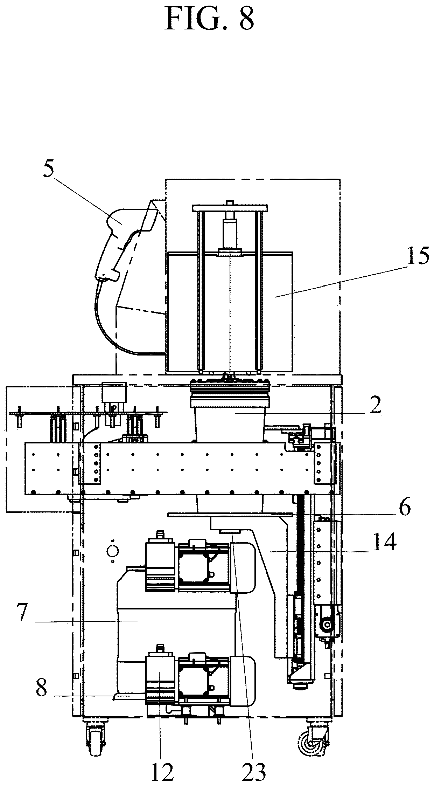

- Fig. 8 is a further side view of the machine (1);

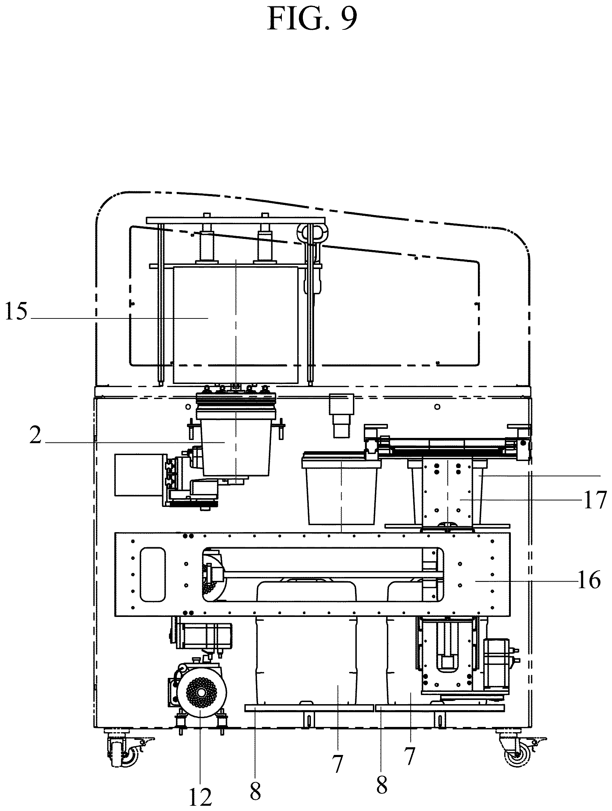

- Fig. 9 is a front view of the rear of the machine (1);

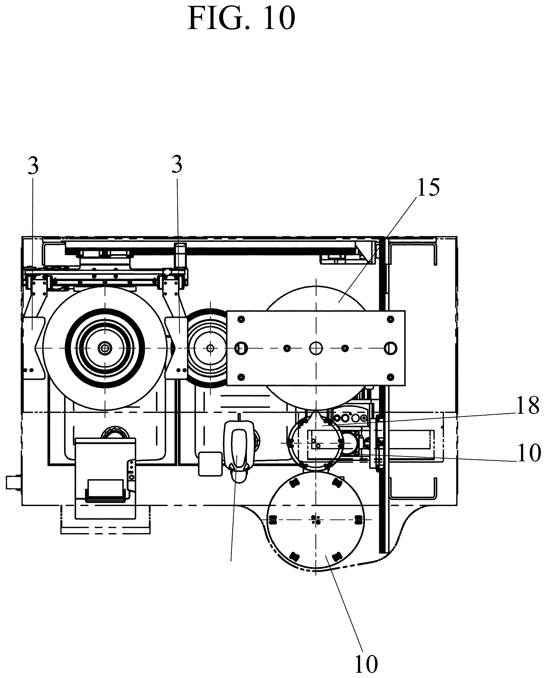

- Fig. 10 is a top view of the machine (1);

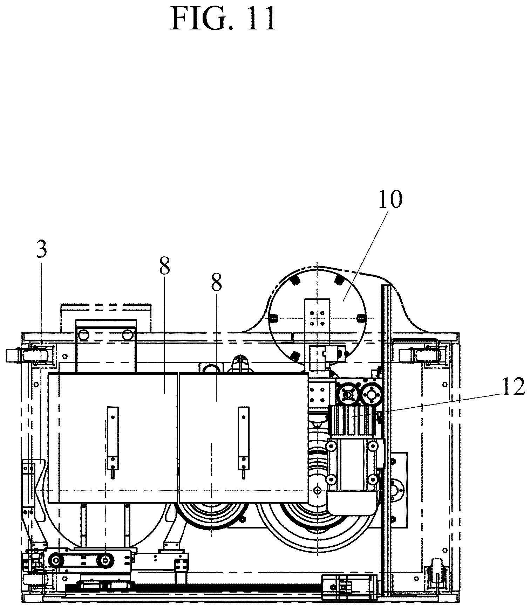

- Fig. 11 is a view from below upwards of the machine (1);

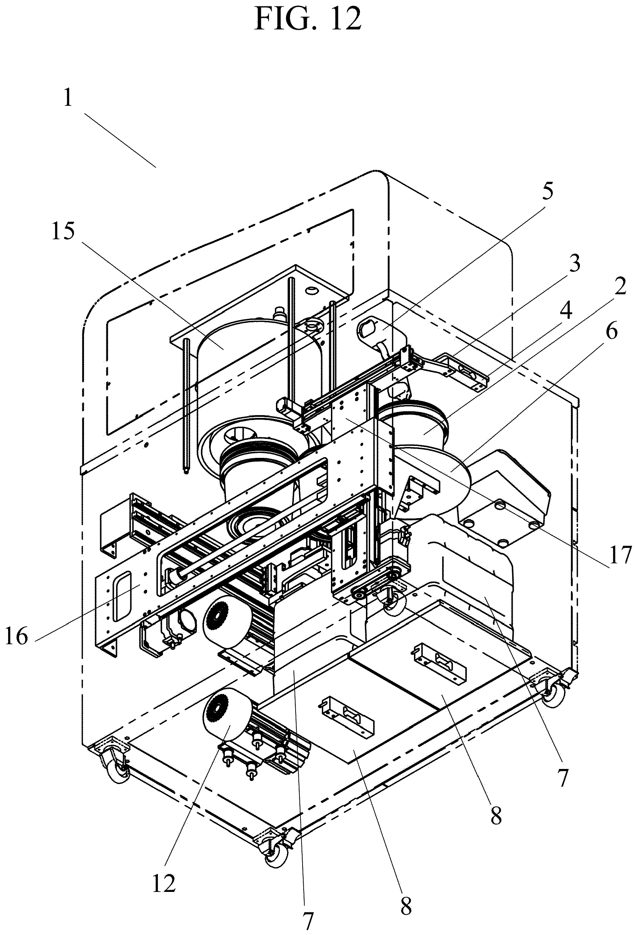

- Fig. 12 is a three-dimensional rear view of the machine (1).

### Detailed description of the Invention

According to a preferred, but non-limiting, embodiment, this invention relates to a completely automatic machine (1) for the packaging, preservation and transport of surgical, histological, autopsy and cytological specimens by healthcare workers in safety.

Considering that formalin is an irreplaceable product for the fixing and preservation of surgical specimens and that the new European Regulation (EU) No. 605/2014 changed the classification of formalin from H351 (suspected of causing cancer) to H350 (can cause cancer) and H341 (suspected of causing genetic mutations), the machine (1) covered by this patent application allows handling formalin with a completely automated, closed-cycle process that makes it compliant with Italian Law No. 81/2008 and, in particular, Article 235, paragraph 2, which governs the use of carcinogens in the workplace.

The machine (1) covered by this patent application consists of:
- a histological container (2);
- a centring device (22) of the container (2) during loading;
- a gripper (3);
- two load cells (4) of the gripper (3);
- a gun barcode reader (5);
- a lifting plate (6);
- a suction cup (23) for holding the container (2);
- two tanks of formalin (7);
- two load cells of the formalin (8);
- a pump for the formalin (9);
- two plates (10) on which is supported a pre-treated aluminium disc (18);
- a sealing plate (11);
- a vacuum pump (12);
- a micro-pump (13);
- a support (14) of the lifting plate (6);
- a vacuum chamber (15);
- a movement group (16) for the horizontal displacement of the container (2) from position 1 (P1) to position 2 (P2) and to position 3 (P3);
- a movement group (17) for the vertical displacement of the container (2);
- a printer (19);
- a suction pump (20) of the aluminium disc (18);
- an electronic control panel (21).

Said machine (1) can also prepare cool surgical specimens by creating a vacuum/vacuum-packing in histological containers (2), inserting an inert gas and sealing with a pre-treated aluminium disc (18).

In addition, by sealing with an aluminium disc (18), the machine (1) provides greater biological safety for the healthcare workers; in fact, the sealing prevents any accidental spillage of biological material from the containers (2) and the removal of the surgical specimen in the dissection step is facilitated because it is possible to open the disc (18) without the aid of tools, since it is provided with a tab.

The machine (1) consists of a single gripper (3) that allows, through two load cells (4), automatically weighing the surgical specimen and transferring it in the various positions:
- Position 1 (P1): loading and unloading of the histological container (2), - weighing the specimen and recognising the capacity of the container (2) by means of barcode and/or RFID;
- Position 2 (P2): dosing the formalin - automatically weighing the formalin loaded by means of two load cells (4) of the gripper (3) and control via the central processing unit or CPU (not shown);
- Position 3 (P3): vacuum/vacuum-packing by means of the vacuum pump (12), insertion of inert gas in a vacuum chamber (15), sealing with pre-treated aluminium disc (18).

In the operating block, the healthcare worker chooses the appropriate container (2), in terms of size, for the surgical specimen in question. Each container (2) is provided with a barcode identifying its size and capacity, so that, once the biological specimen is introduced, by reading the barcode, the correct container (2) for the weight of the biological specimen for correct introduction of the formalin will be identified. The data read is automatically transferred to the CPU.

In the case in which the containers (2) are provided with an RFID bar, the step of reading with the barcode reader is skipped because the system has an RFID reader located near the gripper (3) that automatically reads the size and capacity data of the container (2) and automatically transfers it to the CPU. Only in the case where, during the step of weighing the histological specimen, the container (2) is found to be unsuitable with respect to the mass of said specimen, the machine (1) signals it and returns the container (2) for replacement with a container (2) of larger size.

The process is started by reading the barcode of the container (2) with a gun barcode reader (5); then the operator introduces the container (2) inside the machine (1), defines the program to use on the electronic control panel (21), based on the different packaging needs of the biological specimen, and then the machinery (1), totally automated, executes the desired program.

The programs that can be selected are:
1. Dosing - Sealing
2. Vacuum - Sealing
3. Vacuum - Gas - Sealing
4. Sealing only.

The healthcare worker introduces a histological container (2) with the surgical specimen in position 1 (P1) and the machine (1), knowing the size of the container (2) previously read by the barcode reader (5) or simultaneously read by the RFID reader, adjusts the height of a lifting plate (6) with the aid of a movement group (17) and adjusts the gripper (3) to the upper diameter of the histological container (2).

The machine (1) is equipped with a centring device (22) of the container (2) during loading. By bringing the container (2) in abutment, it is therefore guaranteed to be properly loaded to be able to gripped and held by a gripper (3) provided with two load cells (4) for weighing.

The lifting plate (6), connected to the movement group (17) by means of a support (14), and the gripper (3) can handle several sizes and formats of histological containers (2), four of which have the same diameter (180 mm) and different heights (120 mm, 170 mm, 215 mm and 245 mm) and two others have a diameter different from the previous ones (diameter: 110 mm - height: 120 mm, diameter: 110 mm - height: 180 mm).

Said lifting plate (6) of the container (2) is equipped with a suction cup (23) to ensure the stability of the container (2) on the plate (6), preventing its tipping and the consequent spillage of formalin.

The gripper (3), based on the diameter of the container (2), grips it, after which the lifting plate (6), which moves vertically along the axis Z with the aid of a movement group (17), lowers in such a way that the container (2) remains suspended on said gripper (3) provided with two load cells (4), by means of which the container (2) is weighed with the sample to be analysed inside.

When the operations in position 1 (P1) are finished, the container (2), which is still held suspended by the gripper (3), will be moved horizontally, and then along the axis X, with the aid of a movement group (16), to position 2 (P2) in which the formalin will be dosed.

The inner compartment of the machine (1) contains two tanks of formalin (7) with ready-to-use concentration, that:
- are disposable containers of 5, 10 or 20 litres;
- are positioned over the load cells (8);
- have a drip-less bayonet quick connector that prevents exposure of the operator to any formalin fumes and/or spills, compared to the current procedures in use.

The position of the tanks (7) and of the load cells (8) is in an aspirated compartment due to which any formalin fumes are conveyed and filtered by an assembled filter group (not shown) consisting of a pre-filter, an H13 absolute filter and an active carbon filter; said assembled filter group is positioned on the upper and inner side of the machine (1) and is specific for formaldehyde.

The assembled filter group is equipped with an aspiration/extraction motor to facilitate the aspiration of formalin fumes that, with a pipe brought outside of the machine (1) and connected to an external aspiration system (not shown), conveys the fumes out of the room where the machine (1) is used.

The amount of formalin, which is automatically weighed by means of two load cells (4) of the gripper (3), automatically introduced into the container (2) by means of the pump for the formalin (9) is in proportion, between 1:5 and 1:20, to the ratio between the weight of the biological specimen and the volume of the container (2) for the proper fixing of the biological specimen. After filling with formalin, the container (2) is moved horizontally, always by means of the movement group (16), to position 3 (P3) where it is sealed using pre-treated aluminium discs (18) without generating waste. For sealing, by reading the barcode of the container (2), it is known which disc (18), large or small, should be used to seal said container (2). The plates (10), in turn of two sizes, small and large, on which said pre-treated aluminium disc (18) is supported, automatically move in correspondence of the sealing plate (11), which oscillates to ensure the planarity between the disc (18) and the container (2). Said plate (11), by means of a micro-pump (13) and a pump (20), sucks the disk (18) in such a way as to hold it. The lifting plate (6) raises the container (2) vertically, from low to high, to bring it in correspondence of the disc (18) which is held by a sealing plate (11) that is at the temperature of about 180 °C and that in the interval of 3-5 seconds, depending on whether the disc (18) is small or large, seals said disc (18) on the container (2). The lifting of the plate (10) is electronically controlled during raising in order to adjust the pressure applied for sealing.

After being sealed, the container (2) is moved, always horizontally, with the aid of a movement group (16) to position 1 (P1) for its extraction.

On the right side of the machine (1), there is arranged an electrical panel on the upper part of which are arranged an active carbon filter, a HEPA biohazard filter, a fume extraction aspirator, a vacuum pump (12) for the chamber (15) in position 3 (P3), a pump for the formalin (9) and a pump (20) for the suction of the aluminium disc (18).

As mentioned previously, the machine (1) covered by this patent application can prepare cool surgical specimens using the vacuum and/or vacuum-packing technique and/or a protective atmosphere at 4 °C.

In this case as well, the biological specimen collected in the operating theatre is inserted directly in the specimen container (2), which in turn is inserted directly inside the machine (1).

The electronic control panel (21), positioned in the upper part of the machine (1), allows the operator to select the program for cool packaging:
1. Vacuum - Sealing;
2. Vacuum - Gas - Sealing.

The container (2), with the biological specimen inside, is brought under vacuum by means of the vacuum pump (12), eliminating about 80% of the oxygen in the case where the program selected is the first of the two; in the case of use of the second program, just vacuum-packing alone eliminates about 99.99% of the oxygen and gaseous nitrogen is inserted in the vacuum chamber (15) to compensate for the variation of the depression between the inside and the outside of the container (2) to prevent crushing of the biological specimen, after which the container (2) is heat sealed with a pre-treated aluminium disc (18).

The use of inert gas, such as nitrogen, serves solely to avoid the crushing of the biological specimen, due to the difference between the internal and external depression of the container (2) and to increase the preservation time of 48-72 hours. After the automatic operation of the machine (1) is finished, the operator then seals the specimen container (2) with the disc (18) to store it in the portable refrigerator at 4 °C by means of which it will be sent to the pathology laboratory.

The portable refrigerator can be connected to the 220-Volt mains or 12-24 Volts for transport in a motor vehicle. The temperature is controlled the use of the data-logger, which allows controlling the temperature throughout the transfer period of biological specimens from the operating block to the pathology laboratory.

With the vacuum, vacuum-packing and/or inert gas technique, the biological specimen can be delivered to the pathology laboratory without altering or compromising subsequent analyses, since the technique used blocks autolytic and regressive phenomena of the removed tissue.

The machine (1) is positioned in the pathology laboratory and allows the operator, in the case of containers (2) coming from the operating block in "cool" mode:
- to pick the cool tissue for subsequent molecular analysis, and specimens for bio-banking;
- perform excision on the specimen to facilitate subsequent penetration of formalin in its interior;
- place the specimen container (2) directly into the machine (1) for filling with formalin in total safety.

On request, said machine (1) can be placed in the operating block for the packaging with formalin only.

After sampling the biological specimen in safety under the hood, the operator can archive the biological specimen as required by current law, through the use of the specific sealing program.

The success of a histological preparation depends on fixing, since it allows maintaining the structural and morphological framework of the tissues unaltered.

When the automatic operation of the instrument is finished, the operator then closes the specimen container with its lid and then inserts the container with the sealed biological specimen in a suitable external container for transport to the pathology laboratory. At the end of each packaging process, a printer (19) prepares an identifying barcode label with all the patient data: name, surname, date of birth, department of origin, type of organ and the date and time of packaging. The specimen container is transported from the operating block to the pathology laboratory in total safety; in addition, the sealing of the container prevents any spillage of fluid and/or biological material.

In addition, the automatic process described, by means of the pre-treated aluminium disc (18), allows the use of the same container (2) for all steps of the process, i.e., from the operating block to the archive, undergoing one, two or three openings and consequent closures depending on the program used. Additionally, on the machine (1) positioned in the pathology laboratory, as a device and upon request, the bag can be used for just the preservation of the biological specimen for archiving, as required by current law.

The machine (1) is equipped with preparation for the expulsion of the air outside after filtering.

In addition, upon request, an anatase TiO2 nanoparticle photocatalytic filter, not shown, can be inserted on it for greater operator safety. Its main feature consists of the photocatalytic activity stimulated by the light of the lamps. The nanoparticles emit electro-negative charges on the surface of the particles when they are stimulated by UV rays emitted by the lamp. The surface electro-negativity promotes oxidation (photocatalysis) of the organic substances, in this case of formalin, which are found near the surface and also co-absorb dirt after the surface redox, purifying the air that passes through it. This action remains perennially active. The organic and inorganic substances, formaldehyde, microbes, bacteria and viruses are transformed, through photocatalysis into lime CaCo3, sodium nitrates NaNo3 and sodium carbonates Ca(NO3)2. The redox process destroys the membranes of bacteria, eliminating them, and coagulates the proteins of the viruses, inhibiting their activity: in a short time, the treated air becomes 70.0% free of bacteria, spores and viruses.

The activated carbon filters specifically for formaldehyde and 99.9 HEPA are a support to the TiO2 filter to ensure maximum yield in the purification from microbial agents and formaldehyde.

The xenon or LED lamp generates wide-spectrum UV rays and the power is from 50 to 100 watts.

The titanium dioxide (TiO2 constructed with nanotechnology) is deposited on the material used, a honeycomb or fibre filter, is crossed by the air aspirated by the internal unit and activated by light of a xenon UV lamp or a special LED that emits ultraviolet light, installed inside the unit.

The materials and dimensions of the invention as above described, illustrated in the accompanying drawings and claimed below, may be any depending on the need. Moreover all details are replaceable with other technically equivalent ones, without departing from the scope of this patent application.

## Claims

1. Automatic machine (1) for the packaging, preservation and transport of surgical, histological, autopsy and cytological specimens by healthcare workers in safety comprising:
- a histology container (2);
- a centring device (22) of the container (2) during loading;
- a gripper (3);
- two load cells (4) of the gripper (3);
- a gun bar code reader (5);
- a lifting plate (6);
- a suction cup (23) for holding the container (2);
- two tanks of formalin (7);
- two load cells of the formalin (8);
- a pump for the formalin (9);
- a plate (10) on which is supported a pre-treated aluminium disc (18);
- a sealing plate (11);
- a vacuum pump (12);
- a micro-pump (13);
- a support (14) of the lifting plate (6);
- a vacuum chamber (15);
- a movement group (16) for the horizontal displacement of the container (2) from a position 1 (P1) to a position 2 (P2) and to a position 3 (P3);
- a movement group (17) for the vertical displacement of the container (2);
- a printer (19);
- a suction pump (20) of the aluminium disc (18);
- an electronic control panel (21);
**characterised in that** the gripper (3) is designed to automatically weigh the surgical specimen by means of load (4) cells and transfer it in the positions of:
- Position 1 (P1): loading and unloading of the histological container (2) - weighing the specimen and recognising the capacity of the container (2) by means of barcode;
- Position 2 (P2): dosing the formalin - automatically weighing the formalin loaded by means of two load cells (4) of the gripper (3);
- Position 3 (P3): vacuum/vacuum-packing by means of the vacuum pump (12), insertion of inert gas in the vacuum chamber (15) and sealing with the pre-treated aluminium disc (18).

2. Automatic machine (1) according to claim 1 **characterised in that** the lifting plate (6), connected to the movement group (17) by means of the support (14), and the gripper (3) are designed to handle several sizes and formats of histological containers (2).

3. Automatic machine (1) according to claim 1 **characterised in that** the gripper (3) is designed to grip the container (2), causing the lifting plate (6), which moves vertically with the aid of the movement group (17), to lower in such a way that the container (2) remains suspended on said gripper (3) provided with two load cells (4), by means of which the container (2) is weighed with the sample to be analysed inside.

4. Automatic machine (1) according to claim 1 **characterised in that** its inner compartment contains two tanks of formalin (7), with a ready-to-use concentration, that are designed:
- to be disposable containers of 5, 10 or 20 litres;
- to be positioned over the load cells (8);
- to have a drip-less bayonet quick connector.

5. Automatic machine (1) according to claim 1 **characterised in that** the plate (10) on which rests the pre-treated aluminium disc (18) is designed to move until it comes in correspondence of the sealing plate (11) which, by means of the micro-pump (13) and the pump (20), is designed to suck the disk (18) in such a way as to hold it.

6. Automatic machine (1) according to claim 1 **characterised in that** the lifting plate (6) is designed to rise vertically, from low to high, the container (2) to bring it in correspondence of the disc (18) that is held by the sealing plate (11), which seals said disc (18) on the container (2).

7. Automatic machine (1) according to claim 1 **characterised in that** it is designed to use the same container (2) in all steps of the process from the operating block to the archive, undergoing one, two or three openings and consequent closures depending on the program used.

8. Procedure for the packaging, preservation and transport of surgical, histological, autopsy and cytological specimens by healthcare workers in safety comprising the following steps:
- reading the barcode of a container (2) with a gun barcode reader (5);
- introduction by the operator of the container (2) in position 1 (P1);
- adjusting the height of a lifting plate (6), with the aid of a movement group (17), and adjustment of a gripper (3) to the upper diameter of the histological container (2);
- horizontal displacement of the container (2), which is held suspended by the gripper (3), by means of a movement group (16), to position 2 (P2) in which the formalin is automatically dosed by means of two load cells (4) of the gripper (3);
- automatic introduction of the formalin in the container (2), by means of a pump for the formalin (9) in proportion, between 1:5 and 1:20, to the ratio between the weight of the biological specimen and the volume of the container (2);
- horizontal displacement of the container (2), by means of the movement group (16), to position 3 (P3) where it is sealed using pre-treated aluminium discs (18);
- horizontal displacement of the container (2), by means of a movement group (16), to position 1 (P1) for its extraction.

## Patentansprüche

1. Automatische Maschine (1) zum Verpacken, Konservieren und Transportieren von chirurgischen, histologischen, autopsischen und zytologischen Proben durch im Gesundheitswesen tätige Personen in Sicherheit, umfassend:
- einen Histologie-Behälter (2);
- eine Zentriereinrichtung (22) des Behälters (2) beim Beladen;
- einen Greifer (3);
- zwei Wäge-Zellen (4) des Greifers (3);
- einen Pistolen-Strichcodeleser (5);
- eine Hubplatte (6);
- einen Saugnapf (23) zum Halten des Behälters (2);
- zwei Tanks Formalin (7);
- zwei Wäge-Zellen des Formalins (8);
- eine Pumpe für das Formalin (9);
- eine Platte (10), auf der eine vorbehandelte Aluminiumscheibe (18) gelagert ist;
- eine Dichtungsplatte (11);
- eine Vakuumpumpe (12);
- eine Mikropumpe (13);
- eine Abstützung (14) der Hubplatte (6);
- eine Vakuumkammer (15);
- eine Bewegungsgruppe (16) zum horizontalen Verschieben des Behälters (2) von einer Position 1 (P1) zu einer Position 2 (P2) und zu einer Position 3 (P3);
- eine Bewegungsgruppe (17) zum vertikalen Verschieben des Behälters (2);
- einen Drucker (19);
- eine Saugpumpe (20) der Aluminiumscheibe (18);
- eine elektronische Bedieneinheit (21);
**dadurch gekennzeichnet, dass** der Greifer (3) derart ausgelegt ist, dass er die chirurgische Probe mit Hilfe von Wäge-Zellen (4) automatisch wiegt und in folgende Positionen überführt:
- Position 1 (P1): Be-und Entladen des histologischen Behälters (2) - Wiegen der Probe und Erkennen des Fassungsvermögens des Behälters (2) mittels Barcode;
- Position 2 (P2): Dosieren des Formalins - automatisches Wiegen des mit zwei Wäge-Zellen (4) des Greifers (3) beladenen Formalins;
- Position 3 (P3): Vakuum/Vakuumverpackung mittels der Vakuumpumpe (12), Einbringen von Inert-Gas in die Vakuumkammer (15) und Abdichten mit der vorbehandelten Aluminiumscheibe (18).

2. Automatische Maschine (1) nach Anspruch 1, **dadurch gekennzeichnet, dass** die Hubplatte (6), die mit der Bewegungsgruppe (17) mittels der Abstützung (14) verbunden ist, und der Greifer (3) für die Handhabung mehrerer Größen und Formate von histologischen Behältern (2), ausgelegt sind.

3. Automatische Maschine (1) nach Anspruch 1, **dadurch gekennzeichnet, dass** der Greifer (3) zum Greifen des Behälters (2) ausgebildet ist, wodurch sich die Hubplatte (6) mit Hilfe der Bewegungsgruppe (17) vertikal bewegt, um derart abzusenken, dass der Behälter (2) an dem mit zwei Wäge-Zellen (4) versehenen Greifer (3) aufgehängt bleibt, mittels dessen der Behälter (2) mit der zu analysierenden Probe im Inneren gewogen wird.

4. Automatische Maschine (1) nach Anspruch 1, **dadurch gekennzeichnet, dass** ihr inneres Fach zwei Tanks Formalin (7) mit einer gebrauchsfertigen Konzentration enthält, die ausgelegt sind:
- um Einwegbehälter von 5, 10 oder 20 Litern zu sein;
- um über den Wäge-Zellen (8) positioniert zu werden;
- um einen tropffreien Bajonett-Schnellverschluss zu haben.

5. Automatische Maschine (1) nach Anspruch 1, **dadurch gekennzeichnet, dass** die Platte (10), auf der die vorbehandelte Aluminiumscheibe (18) aufliegt, derart ausgelegt ist, dass sie sich bewegt, bis sie mit der Dichtungsplatte (11) übereinstimmt, die durch die Mikropumpe (13) und die Pumpe (20) derart ausgelegt ist, dass sie die Scheibe (18) derart ansaugt, dass sie diese hält.

6. Automatische Maschine (1) nach Anspruch 1, **dadurch gekennzeichnet, dass** die Hubplatte (6) dazu ausgelegt ist, den Behälter (2) vertikal von niedrig nach hoch anzuheben, um ihn in Übereinstimmung mit der Scheibe (18) zu bringen, die durch die Dichtungsplatte (11) gehalten wird, die die genannte Scheibe (18) am Behälter (2) abdichtet.

7. Automatische Maschine (1) nach Anspruch 1, **dadurch gekennzeichnet, dass** sie dafür ausgelegt ist, in allen Schritten des Prozesses vom Bedienungsblock bis zum Archiv denselben Behälter (2) zu verwenden, der je nach Bedarf eine, zwei oder drei Öffnungen und daraus folgende Verschlüsse, mit bezug auf das verwendete Programm, durchläuft.

8. Verfahren zum Verpacken, Konservieren und Transportieren von chirurgischen, histologischen, autopsischen und zytologischen Proben durch im Gesundheitswesen tätige Personen in Sicherheit, umfassend die folgenden Schritte:
- Lesen des Barcodes eines Behälters (2) mit einem Pistolen-Barcodeleser (5);
- Einführen des Behälters (2) in Position 1 (P1) durch den Bediener;
- Einstellen der Höhe einer Hubplatte (6) mit Hilfe einer Bewegungsgruppe (17) und Einstellen eines Greifers (3) auf den oberen Durchmesser des histologischen Behälters (2);
- horizontales Verschieben des am Greifer (3) hängend gehaltenen Behälters (2) mittels einer Bewegungsgruppe (16) in die Position 2 (P2), in der das Formalin mittels zweier Wäge-Zellen (4) des Greifers (3) automatisch dosiert wird;
- automatisches Einfüllen des Formalins in den Behälter (2) mittels einer Pumpe für das Formalin (9) im Verhältnis zwischen 1:5 und 1:20 zum Verhältnis zwischen dem Gewicht der biologischen Probe und dem Volumen des Behälters (2);
- horizontale Verschiebung des Behälters (2) mittels der Bewegungsgruppe (16) zu Position 3 (P3), wo er mit vorbehandelten Aluminiumscheiben (18) versiegelt wird;
- horizontales Verschieben des Behälters (2) mittels einer Bewegungsgruppe (16) zu seiner Entnahme in Position 1 (P1).

## Revendications

1. Machine automatique (1) pour le conditionnement, la conservation et le transport d'échantillons chirurgicaux, histologiques, d'autopsie et cytologiques par le personnel soignant en toute sécurité, comprenant:
- un conteneur d'histologie (2);
- un dispositif de centrage (22) du conteneur (2) pendant le chargement;
- une pince (3);
- deux cellules de charge (4) de la pince (3);
- un lecteur de code à barres pistolet (5);
- une plaque de levage (6);
- une ventouse (23) pour fixer le conteneur (2);
- deux réservoirs de formol (7);
- deux cellules de charge du formol (8);
- une pompe pour le formol (9);
- une plaque (10) sur laquelle un disque en aluminium prétraité (18) est supporté;
- une plaque d'étanchéité (11);
- une pompe à vide (12);
- une micro-pompe (13);
- un support (14) de la plaque de levage (6);
- une chambre à vide (15);
- un groupe de déplacement (16) pour le déplacement horizontal du conteneur (2) d'une position 1 (P1) à une position 2 (P2) et à une position 3 (P3);
- un groupe de mouvement (17) pour le déplacement vertical du conteneur (2);
- une imprimante (19);
- une pompe d'aspiration (20) du disque en aluminium (18);
- un panneau de commande électronique (21);
**caractérisée en ce que** la pince (3) est conçue pour peser automatiquement l'échantillon chirurgical au moyen de cellules de charge (4) et le transférer dans les positions suivantes:
- Position 1 (P1): chargement et déchargement du conteneur histologique (2) - pesage de l'échantillon en reconnaissant la capacité du conteneur (2) au moyen d'un code à barres;
- Position 2 (P2): dosage du formol - pesage automatique du formol chargé au moyen de deux cellules de charge (4) de la pince (3);
- Position 3 (P3): conditionnement vide/vide au moyen de la pompe à vide (12), introduction de gaz inerte dans la chambre à vide (15) et fermeture étanche avec le disque en aluminium prétraité (18).

2. Machine automatique (1) selon la revendication 1, **caractérisée en ce que** la plaque de levage (6), reliée au groupe de mouvement (17) au moyen du support (14), et la pince (3) sont conçus pour manipuler plusieurs tailles et formats des conteneurs histologiques (2).

3. Machine automatique (1) selon la revendication 1, **caractérisée en ce que** la pince (3) est conçue pour saisir le conteneur (2), entraînant la plaque de levage (6), qui se déplace verticalement à l'aide du groupe de mouvement (17), pour s'abaisser de manière à ce que le conteneur (2) reste suspendu à ladite pince (3) munie de deux cellules de charge (4) au moyen desquelles le conteneur (2) est pesé avec l'échantillon à analyser à l'intérieur.

4. Machine automatique (1) selon la revendication 1 **caractérisée en ce que** son compartiment intérieur contient deux réservoirs de formol (7), avec une concentration prête à l'emploi, qui sont conçus pour:
- être des conteneurs jetables de 5, 10 ou 20 litres;
- être positionnés sur les cellules de charge (8);
- avoir un connecteur rapide à baïonnette sans goutte.

5. Machine automatique (1) selon la revendication 1, **caractérisée en ce que** la plaque (10) sur laquelle repose le disque en aluminium prétraité (18) est conçue pour se déplacer jusqu'à ce qu'elle vienne en correspondance de la plaque d'étanchéité (11) qui, par des moyens de la micro-pompe (13) et de la pompe (20) est conçue pour aspirer le disque (18) de manière à le maintenir fixe.

6. Machine automatique (1) selon la revendication 1 **caractérisée en ce que** la plaque de levage (6) est conçue pour soulever verticalement, de bas en haut, le récipient (2) pour l'amener en correspondance du disque (18) qui est maintenu fixe par la plaque d'étanchéité (11), qui scelle ledit disque (18) sur le conteneur (2).

7. Machine automatique (1) selon la revendication 1, **caractérisée en ce qu'**elle est conçue pour utiliser le même conteneur (2) à toutes les étapes du processus, du bloc de commande à l'archive, en passant par une, deux ou trois ouvertures et des fermetures consécutives qui dépendent du programme utilisé.

8. Procédé pour le conditionnement, la conservation et le transport d'échantillons chirurgicaux, histologiques, d'autopsie et cytologiques par le personnel soignant en toute sécurité, comprenant les opérations suivantes:
- lecture du code à barres d'un conteneur (2) avec un lecteur de code à barres pistolet (5);
- introduction par l'opérateur du conteneur (2) dans une position 1 (P1);
- réglage de la hauteur d'une plaque de levage (6) à l'aide d'un groupe de mouvement (17) et ajustage d'une pince (3) au diamètre supérieur du conteneur histologique (2);
- déplacement horizontal du conteneur (2), qui est maintenu suspendu par la pince (3), au moyen d'un groupe de mouvement (16), vers la position 2 (P2) dans laquelle le formol est dosé automatiquement au moyen de deux cellules de chargement (4) de la pince (3);
- introduction automatique du formol dans le conteneur (2) au moyen d'une pompe pour le formol (9) proportionnellement, entre 1:5 et 1:20, au rapport entre le poids de l'échantillon biologique et le volume du conteneur (2);
- déplacement horizontal du conteneur (2), au moyen du groupe de déplacement (16), vers la position 3 (P3) où il est scellé à l'aide de disques en aluminium prétraités (18);
- déplacement horizontal du conteneur (2), au moyen d'un groupe de déplacement (16), vers la position 1 (P1) pour son extraction.
